# EUROPEAN PATENT SPECIFICATION

(11) **EP 0 985 295 B1**
(45) Date of publication and mention of the grant of the patent: **12.01.2005**
(21) Application number: 98920415.1
(22) Date of filing: 06.05.1998
(51) Int. Cl.: H04L 12/56, H04Q 3/00, H04L 29/06, H04L 12/28, H04Q 11/04

(54) **CONTROL IN A DATA ACCESS TRANSPORT SERVICE**
STEUERUNG IN EINEM DATENZUGRIFFSÜBERTRAGUNGSDIENST
GESTION DU SERVICE DE TRANSPORT D'ACCES AUX DONNEES

(30) Priority: 30.05.1997 CA 2206616; 02.06.1997 US 48325 P; 24.12.1997 US 997799
(43) Date of publication of application: 15.03.2000
(73) Proprietor: Nortel Networks Limited, St. Laurent, Quebec H4S 2A9 (CA)
(72) Inventor: HOLT, Robert, Hugh, Nepean, Ontario K2G 5C7 (CA); GIBSON, Robert, Thomas, Ottawa, Ontario K1V 9T4 (CA); MYERS, Robert, Mississauga, Ontario L5N 4S2 (CA)
(74) Representative: Free, Rachel Alder
(86) International application number: PCT/CA1998/000436
(87) International publication number: WO 1998/054868

(56) References cited:
- WO-A-95/01063
- US-A- 5 581 610

## Description

### Field Of The Invention

The present invention relates generally to data communications network access and, more particularly, to Internet Protocol based services, dial-in data network access, data network transport, Virtual Private Dial-in Networks, and ISDN BRI and PRI data connections.

### Background Of The Invention

Current data dial-in services permit end-users to connect their Personal Computers (PCs) and routers to a Data Service Provider (DSP). The DSP provides end-users with access to the Global Internet, and, in the case of Corporate DSPs, access to corporate intranets.

Traditionally, connectivity between end-user PCs and a DSP is achieved through the use of a PC modem, which sends packetized data by modulating an analog signal. The modem uses the Public Switched Telephone Network (PSTN) to achieve connectivity to a corresponding DSP-owned modem in a modem pool, which de-modulates the signal and routes the packetized data to the appropriate destination, based on the control information embedded in the data packet. Alternatively, connectivity may be achieved via ISDN BRI or PRI access facilities. End-user authentication, authorization, and accounting is performed by the ISP via standard techniques such as clear text password authentication, Password Authentication Protocol (PAP), or Challenge Handshake Authentication Protocol (CHAP). Once an end-user has been authenticated as a valid user, the end-user's data packets are sent to the appropriate destination (depending on the data packet's destination address), allowing the end-user to use data networking applications such as telnet, electronic mail, File Transfer Protocol (FTP), and Hyper-Text Markup Language (HTML) applications.

This arrangement has led to some problems. Network studies have shown that a typical end-user dial-in data session lasts for twenty minutes, and that some sessions remain active for hours or days. These long duration data calls can cause congestion of the PSTN, which is engineered for voice calls which are typically three to five minutes in duration. PSTN congestion results in added cost to LECs in regrading voice switches, and provisioning additional inter-office facilities (IOF) to handle the added load between voice switches.

From the DSP perspective, dial-in data services have created a different set of problems. The cost of maintaining modem pools contributes a large percentage of a DSP's operating costs. Additionally, increasing modem pool capacity requires new access lines (either single access lines or multiplexed facilities such as Primary Rate Interface ISDN or channelized T1), which require significant lead-time for the LEC to install, making it difficult for a DSP to react quickly to increasing market needs in a timely fashion.

As a solution to these problems, Local Exchange Carriers (LECs) and some Large DSPs have begun to investigate alternative connectivity options allowing end-users to access the internet or corporate intranet. These service providers create a Data Access Transport Service (DATS) through which DSPs, who subscribe to the DATS, outsource their ISDN Basic Rate Interface (BRI) and analog modem pools to an LEC or DSP (hereinafter, for simplicity, referred to as "the LEC"), who maintain a large modem pool to be shared by all subscribed DSPs. Thus, a DATS allows the DSPs to operate a Virtual Private Dial-in Network (VPDN), where calls and virtual resources to the said DSP remain private and confidential, even though the physical facilities are shared among multiple DSPs.

DATS calls, which can be recognized from the dialed number by the originating switch, can be immediately diverted to the DATS equipment via direct trunking facilities, thus removing long duration data calls from interoffice facilities, tandem and egress switches. Additionally, LECs can also implement front-end devices that recognize end-user data calls and divert the calls to DATS equipment via direct trunking facilities, thus removing such calls from the originating switch as well, effectively removing PSTN congestion due to long duration data calls.

DATS tariffs can be based on the number of logical modem ports subscribed to (which defines the maximum number of simultaneous end-users who can access that particular DSP via DATS), and the Wide Area Network (WAN) link(s) that provide connectivity between the DSP data equipment and the DATS data equipment (which defines the maximum instantaneous aggregate bandwidth available to all end-users connected to that particular DSP via DATS). End-user AAA (Authentication, Authorization, and Accounting) can be performed by the LEC on behalf of the DSP, or alternatively, the LEC can perform only partial authentication and forward on the information to the DSP via tunneling protocols such as Layer 2 Forwarding (L2F), Point-to-Point Tunneling Protocol (PPTP), or Layer 2 Tunnelling Protocol (L2TP).

The DATS does effectively remove the PSTN congestion issue, and can provide DSPs a more cost-effective arrangement than managing their own modem pool (the subscribed DSP benefits from the economy of scale provided by the LEC's DATS large modem pool). However, some issues arise with this implementation. First, the LEC providing the DATS must ensure that it can guarantee to its subscribed DSPs a pre-defined quality of service. That is, the LEC needs to guarantee that a particular DSP will have access to the number of logical ports it has subscribed to (with an agreed blocking ratio). To meet this requirement, the LEC must be able to enforce a given DSP's service quota so that, during periods of high demand, a DSP will not use more resources, or ports, than it has subscribed to, which results in lost revenue to the LEC, and may negatively impact other DSPs' service quality. This is a challenging requirement, since it involves a real-time view of all simultaneous users connected to each DSP, and the ability to refuse connectivity to a particular DSP (should a connection request exceed that DSP's service quota).

Another issue with DATS relates to the distribution of calls over multiple DSP Network Gateways (NGs). If tunneling protocols are used, a DSP may interface with the DATS via more than one Network Gateway, which terminates the tunnelling protocol. In such cases, it is important that the DATS system maintain an even call distribution among the Network Gateways, such that each end-user who is connected to the DSP is provided with the same quality of service (bandwidth, delay, etc.) as other connected end-users. Additionally, a DSP may install Network Gateways of different processing power, such that it becomes important that the DATS system distribute the calls based on the processing power and bandwidth handling capability of each Network Gateway. This is a challenging requirement, since it involves a real-time view of all simultaneous users connected to each DSP's Network Gateway, and the ability to direct new data calls to specific Network Gateways, taking into account the Network Gateway's processing power and bandwidth handling capability.

An important service offering for ISDN BRI end-users is the ability to support Multilink Point-to-Point Protocol (MLP), which binds the two B-channels of an ISDN BRI connection together, giving the end-user 128 kbps of effective throughput. In order for the MLP to function, however, all associated MLP segments (known as a MLP bundle) must be sent to the same Network Gateway when a tunnelling protocol is used. However, the PSTN may route different segments of a MLP bundle to diverse DATS facilities, to different pieces of equipment that route calls to Network Gateways independently. While this is an inherent characteristic of a DATS system that improves reliability, it also makes MLP coordination a challenge. Also, some ISDN terminal adaptors can send data in a 56 kbps format (as opposed to the traditional 64 kbps format), as some LECs charge higher rates for 64 kbps ISDN calls. This can cause problems, however, as DATS equipment receiving the call would interpret the call (based on the ISDN signalling message) as an analog call, and route the call to an analog modem, which would cause the call to fail. A DATS system needs an implementation that can indicate that an incoming ISDN call is of the 56 kbps data format, so that it can treat the call appropriately.

Finally, while a DSP which subscribes to a DATS does not need to physically manage a modem pool, it loses access to vital operations information it needs for activities such as customer service, marketing, troubleshooting, forecasting, and engineering. Also, some DSPs may require some real-time service tuning (for example, changing the DSP's number of ports available). A DATS must be able to provision DSP service attributes in real-time, provide real-time access to service information for troubleshooting purposes, as well as provide a repository of past system performance, for DATS performance analysis. Since the DATS may be quite large (on the order of tens of thousands of ports), it is important for LEC operations efficiency that this information be kept in a central, easily accessed location. Also, it is sometimes necessary for the LEC and/or DSP to alter the administrative state of a DATS network element, i.e. to disallow new calls from being routed through certain network elements (for example, if software is to be upgraded), while at the same time allowing existing calls already assigned to the said device to remain unaffected (such calls would be removed when the end-user terminates the call). This poses a challenge for the LEG, as today's DATS implementations involve the distributed installation of multiple modem termination units ( a modem termination unit is also known as a Network Access Server (NAS), which can typically support up to 100 multiple end-user data sessions).

Traditionally, centralized control and monitoring of data equipment is implemented using network management applications that employ standard management protocols such as Simple Network Management Protocol (SNMP). The management applications, however, were not designed for real-time service control applications, where the response time must be sufficiently low so as not to exceed either PSTN voice call timers, or end-user call response expectations.

US Patent number 5581610 discloses a method of regulating and managing network traffic at a mediated access service control point in an advanced intelligent switched telephone network. When a query destined for a third party service control point is generated at a service switching point, it is sent to the mediated access service control point which processes the query to determine if the query should be forwarded to the third party service control point. If the query does not violate any of the rates that have been negotiated between the local exchange carrier and the third party, the query is passed from the mediated access service control point to the third party control point. If the query causes one or more of the negotiated rates to be violated, the query is dropped.

### Summary of the Invention

It is an object of the present invention to provide a new and improved data access transport service.

One aspect of the invention provides a data access transport system comprising a plurality of network access servers and a network controller connected to the network access servers. Each network access server is operable: to send a connection setup request to the network controller on receipt of a data call before answering the data call, the connection setup request specifying a data service provider to which a connection is requested; and to receive a connection setup response from the network controller; to respond to a connection setup response indicating that the connection is to be completed by answering the data call and initiating a connection to the specified data service provider. The network controller is operable: to receive a connection request from any of the network access servers; to determine whether a quantity of network resources currently used by the data service provider specified in the connection setup request is less than a service quota assigned to the data service provider; and to send a connection setup response to the network access server which sent the connection setup request, the connection setup response indicating that the requested connection is to be completed when the quantity of network resources currently used by the data service provider is less than the assigned service quota and the connection setup response. The system is characterised in that: the connection setup response indicates whether the requested connection is to be completed, wherein the network controller is operable to send, to the network access server which sent the connection setup request, a connection setup response indicating the requested connection is not to be completed when the quantity of network resources currently used by the data service provider is not less than the assigned service quota; and each network access server is operable to respond to a connection setup response indicating that the connection is not to be completed by initiating a busy indication.

Another aspect of the invention provides a network controller for use in a data access transport system comprising a plurality of network access servers connected to the network controller. The network controller comprises: means for receiving a connection setup request from any of the network access servers; means for determining whether a quantity of network resources currently used by the data service provider specified in the connection setup request is less than a service quota assigned to the data service provider; and means for sending a connection setup response to the network access server which sent the connection setup request, the connection setup response indicating that the requested connection is to be completed when the quantity of network resources currently used by the data service provider is less than the assigned service quota, and characterised in that the connection setup response indicates the requested connection is not to be completed when the quantity of network resources currently used by the data service provider is not less than the assigned service quota.

These aspects of the invention enable the network controller to enforce service quotas for each of the data service providers served by the data access transport service so that network access servers of the data access transport service can be shared to realize economies of scale.

The network controller may further comprise: means for maintaining a count of active calls to each data service provider served by the data access transport system; means for maintaining a count of active calls served by each network gateway served by the data access transport system; and means for selecting a network gateway for completing a connection to a data service provider based on the counts of active calls served by each network gateway connected to the data service provider; the means for sending a connection setup response being responsive to the means for selecting a network gateway to send a connection setup response specifying the selected network gateway.

These features enable the network controller to distribute data calls across multiple network gateways so that each end user receives approximately the same level of service.

The network controller may comprise means for maintaining a record of tunnels currently connected between network access servers and network gateways. The means for selecting a network gateway may be operable to select a network gateway based on the counts of active calls served by each network gateway and the record of tunnels currently connected between network access servers and network gateways.

These features enable the network controller to select a network gateway so as to use an existing tunnel instead of a less busy network gateway to which no tunnel is currently established. This can reduce tunneling protocol overhead.

The network controller may comprise means for recognizing call setup requests corresponding to segments of a MLP call. The means for selecting a network gateway for completing a connection to a data service provider may be responsive to the means for recognizing call setup requests corresponding to segments of a MLP call to select the same network gateway for all segments of a MLP call.

These features enable the network controller to ensure that MLP calls are properly handled by the data access transport service.

The network controller may comprise means for recognizing call setup requests corresponding to data calls requiring 56 kbps service. The means for sending a connection setup response may be responsive to the means for recognizing call setup requests corresponding to data calls requiring 56 kbps service to send a connection setup response indicating that 56 kbps service is required.

These features enable the network controller to ensure that 56 kbps calls are properly handled by the data access transport service.

The network controller may comprise: means for deriving operational data from at least one of connection setup requests, connection setup responses, connection release requests, connection release acknowledgements and error conditions detected by the network controller; and means for recording at least some of the derived operational data.

These features enable the network controller to collect in real time operational data needed by the data service providers and the data access transport service providers to manage their services effectively without the need for costly polling of network components.

The network controller may comprise means for flagging network gateways as disabled. The means for selecting a network gateway may respond to the means for flagging network gateways as disabled by not selecting any network gateway currently flagged as disabled.

The network controller may also comprise means for flagging groups of directory numbers as disabled, each directory number group comprising at least one directory number. The means for sending a connection setup response may respond to the means for flagging directory number groups as disabled to send connection setup responses indicating that connections are not to be completed in response to connection setup requests specifying directory numbers in directory number groups which are flagged as disabled.

The network controller may also comprise means for flagging network access servers as disabled. The means for sending a connection setup response may respond to the means for flagging network access servers as disabled to send connection setup responses indicating that connections are not to be completed in response to connection setup requests sent by network access servers which are flagged as disabled.

These features enable the administrators of the data access transport service to assign and enforce administrative states on individual network components.

Another aspect of the invention provides a network access server for use in a data access transport system comprising a network controller connected to the network access server. The network access server comprises; means for sending a connection setup request to the network controller on receipt of a data call before answering the data call, the connection setup request specifying a data service provider to which a connection is requested; means for receiving a connection setup response from the network controller; means for answering the data call and initiating a connection to the specified data service provider in response to a connection setup response indicating that the connection is to be completed; characterised in that the connection setup response indicates whether the requested connection is to be completed and said network access server further comprises means for initiating a busy indication in response to a connection setup response indicating that the connection is not to be completed.

The network access server may further comprise means responsive to a signal indicating that the network access server is disabled to send a signal to an access network indicating that access channels of the network access server are unavailable for use.

The network access server may also comprise means responsive to a signal indicating that the network access server is re-enabled to send a signal to an access network indicating that access channels of the network access server are available for use.

Yet another aspect of the invention provides a method for operating a data access transport system comprising a plurality of network access servers and a network controller connected to the network access servers. The method comprises: sending a connection setup request from a network access server to the network controller on receipt of a data call before answering the data call, the connection setup request specifying a data service provider to which a connection is requested; determining at the network controller whether a quantity of network resources currently used by the data service provider specified in the connection setup request is less than a service quota assigned to the data service provider; sending a connection setup response from the network controller to the network access server which sent the connection setup request, the connection setup response indicating that the requested connection is to be completed when the quantity of network resources currently used by the data service provider is less than the assigned service quota; responding at the network access server to a connection setup response indicating that the connection is to be completed by answering the data call and initiating a connection to the specified data service provider; characterised in that the connection setup response indicates the requested connection is not to be completed when the quantity of network resources currently used by the data service provider is not less than the assigned service quota and said method futter comprises responding at the network access server to a connection setup response indicating that the connection is not to be completed by initiating a busy indication.

Still another aspect of the invention provides a method for operating a network controller for use in a data access transport system comprising a plurality of network access servers connected to the network controller. The method comprises: receiving a connection setup request from any of the network access servers; determining whether the quantity of network resources currently used by the data service provider specified in the connection setup request has a current number of active calls less than a service quota assigned to the data service provider; and sending a connection setup response to the network access server which sent the connection setup request, the connection setup response indicating that the requested connection is to be completed when the quantity of network resources currently used by the data service provider is less than the assigned service quota characterised in that the connection setup response indicates the requested connection is not to be completed when the quantity of network resources currently used by the data service provider is not less than the assigned service quota.

Another aspect of the invention provides a method for operating a network access server in a data access transport system comprising a network controller connected to the network access server. The method comprises: sending a connection setup request to the network controller on receipt of a data call before answering the data call, the connection setup request specifying a data service provider to which a connection is requested; receiving a connection setup response from the network controller; answering the data call and initiating a connection to the specified data service provider in response to a connection setup response indicating that the connection is to be completed; characterised in that the connection setup response indicates whether the requested connection is to be completed and said method further comprises initiating a busy indication in response to a connection setup response indicating that the connection is not to be completed.

An embodiment of the invention provides a system whereby analog modem and/or ISDN BRI data calls to a DATS are processed in real time in order to enforce service quotas, process requirements based on data call service type, balance calls across DSP terminating devices, support MLP and 56 kbps features for ISDN, and provide access to real-time network status information. The invention also provides the ability to invoke administrative states on specific network elements involved in a Data Access Transport Service (DATS), wherein the control is applied centrally.

The embodiment provides a method for centralized real-time control of a distributed DATS system. The method includes steps for determining the number of active call resources assigned to a DSP and for limiting the number of simultaneous call resources (assigned to a particular DSP) to a pre-configured value, where call resources may be the number of call sessions, the bandwidth utilized by each call, the aggregate bandwidth used by the call sessions, etc. The method also includes steps to distribute calls to a DSP's multiple Network Gateways so that a pre-determined relative load on each Network Gateway is maintained, and so that all segments of a MLP bundle are routed to a common Network Gateway. The method also allows for the distinguishing between analog modem calls and ISDN data calls, and between ISDN 64 kbps and 56 kbps data call formats. The method also provides a repository of centrally stored service configuration data, as well as historical call and event logs and operational measurements. Additionally, the method provides a method by which a central directory of information may be maintained against DSPs, and against individual DATS system components, allowing this information to be transmitted to individual DATS system elements (such as the NAS, the Network Gateway, Management Systems, etc.). Finally, the method provides the ability to perform DATS system element auditing, to ensure that DATS elements are operating as expected.

In operation of the embodiment, a telephone switching system routes an analog modem or ISDN BRI call to a Network Access Server (NAS) of a DATS system. This routing is performed based on the dialed number, which the telephone system recognizes as a DATS number. In addition to routing the call to the NAS, the telephone system also provides the NAS with the dialed number, as well as the calling party's number (via standard telephony signalling techniques such as Primary Rate Interface (PRI) signalling or Common Channel Signalling number 7). Upon completion of the routing of the call at the NAS, the NAS then sends a connection setup request to a Network Controller (NC) ), including information such as the dialed number, call type (analog modem or ISDN data), and a unique call identifier. This indication is transmitted via a logical signalling path between the NAS and the NC. The NC matches the dialed number against stored DSP information, and, based on the information, determines if the call should be completed (based on the number of active calls to the DSP). The NC then signals the NAS with an indication that either authorizes or refuses the call. The decision to accept or refuse the call is based on the available resources in the DATS network, both physical and logical (for example, the number of active calls to the associated DSP, or bandwidth available on affected links, or processing/ call handling capacity remaining on individual components) and the validity of the requested resources (for example, the dialed number). If the call is authorized, the Network Gateway to which the data call will be routed is indicated to the NAS (based on Network Gateway load balancing and MLP handling algorithms), along with additional service-related information (such as an indication that a call originally detected by the NAS as an analog modem call is actually a 56 kbps ISDN data call), and an active call count for the DSP is incremented. The NAS then completes the call to the indicated Network Gateway using appropriate end-user AAA, control, and communication protocols. Upon termination of the data call (either by end-user or DSP action), the NAS signals to the NC that the call has been terminated, including information such as the termination cause, send and receive data rates, and tunnel protocol information (if a tunnel protocol was used in completing the call). This information is stored at the NC for later analysis or troubleshooting purposes. Additionally, the NC can also terminate a call if required, in which case an indication is sent to the NAS instructing it to release the call.

In one example, an LEC may implement a DATS system in order to relieve Public Switched Telephone System (PSTN) congestion, as well as provide value-added transport services to DSPs. In such a scenario, the LEC would install a number of NASs with connectivity to the PSTN, creating a large modem pool, which is shared by DSPs which subscribe to the DATS. Note that while described as a modem pool, the installation of NASs may also support ISDN data calls, or other data access protocols such as ADSL. Each NAS has connectivity to each DSP via logical data network connections such as those provided via X.25, Frame Relay or ATM. Each DSP subscribing to the DATS requests a number of logical modem or ISDN data ports, as well as the bandwidth of the network connection into the DATS system. Note that the number of ports determines the total number of simultaneous calls (or ISDN B-channels in the case of ISDN data calls) to the DSP via the DATS. In its efforts to ensure that each DSP will have available to it the resources subscribed to, the LEC will install a NC, thus allowing the LEC to limit calls to a particular DSP. Analog modem and ISDN data call limits (or service quotas) can be enforced separately, or can be combined. Additionally, if the DSP requires multiple Network Gateways, the LEC can also distribute calls across the multiple Network Gateways, and can ensure that individual segments of a MLP bundle are routed to a common Network Gateway. The LEC would access the historical logs and operational measurements stored on the NC in order to forecast DATS growth, identify potential points of congestion, troubleshoot network failures, or trace the cause of customer complaints.

### Brief Description Of The Drawings

Embodiments of the invention are described below with reference to accompanying drawings in which:
Figure 1 is a schematic representation of a previously proposed DATS system;
Figure 2 is a schematic representation of a DATS system including a NC, in accordance with an embodiment of the present invention; and
Figures 3a and 3b are flow charts illustrating operation of the DATS system of Figure 2.

### Detailed Description

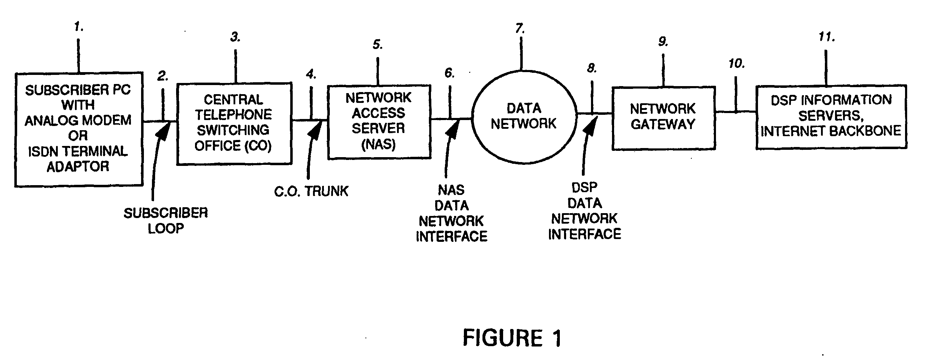

Referring to Figure 1, an end-user's personal computer (PC) outfitted with either a modem or an ISDN Terminal Adaptor (TA) 1 is connected via the subscriber loop 2 to a central telephone switching office (CO) 3. The CO 3 is connected directly, or indirectly (via tandem switching systems) to a Network Access Server (NAS) 5 via a CO trunk 4. The NAS 5 contains the Digital Signal Processing circuitry (not shown) required for the support of analog modem calls, as well as the HDLC and signalling processor (also not shown) required for ISDN data call support. The NAS 5 also supports end-user authentication schemes such as PAP, CHAP, and RADIUS; link-layer protocol processing such as Serial Link Interface Protocol (SLIP), Point-to-point protocol (PPP); tunnelling protocol such as Layer 2 Forwarding (L2F), Layer 2 tunnelling protocol (L2TP); and, data networking protocols such as Transport Control Protocol (TCP), User Datagram Protocol (UDP), Internet Protocol (IP); as well as link-layer protocols such as Ethernet, Frame Relay, X.25, or Asynchronous Transfer Mode (ATM). The NAS 5 connects to the DSP's Network Gateway 9 via a data network 7. The NAS 5 connects to the data network 7 via a NAS Data Network Interface 6, using protocols such as Ethernet, Token Ring, Fiber Distributed Data Interface (FDDI), Frame Relay, or ATM. The Network Gateway 9 connects to the data network 7 via the DSP Data Network Interface 8 , using protocols such as Ethernet, Token Ring, Fiber Distributed Data Interface (FDDI), Frame Relay, or ATM. The data network 7 provides the necessary protocol interworking (not shown) in order to achieve compatibility between interfaces 6 and 8. The Network Gateway 9 provides the tunnelling protocol termination on the DSP side. The Network Gateway 9 is connected to other DSP devices and resources 11 such as information servers, or an internet backbone gateway, which provides connectivity to the public Internet Backbone.

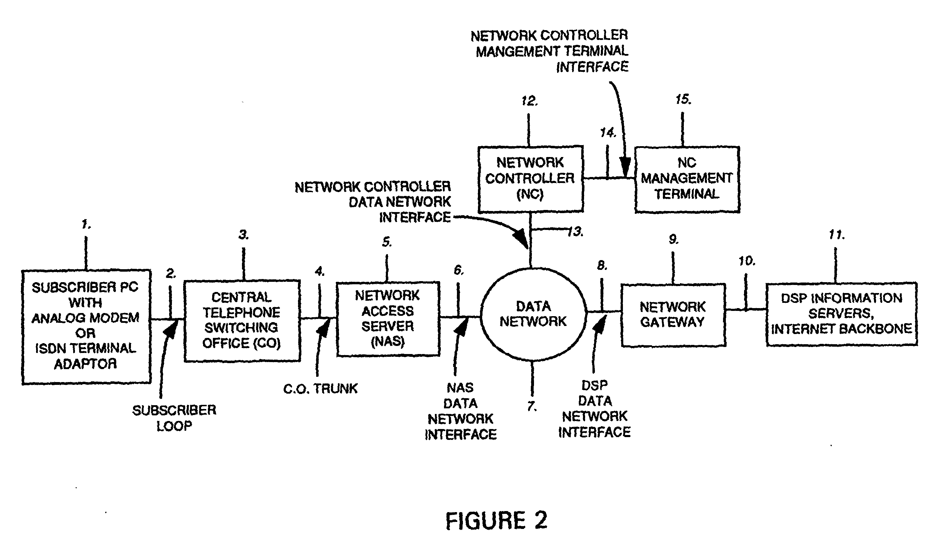

Referring to Figure 2, reference numerals 1 to 11 refer to the same corresponding elements as were described above with reference to Figure 1. Figure 2 also includes a Network Controller (NC) 12, and a NC Management Terminal 14. The NC 12 is connected to the NAS 5 via the data network 7. The NC 12 is connected to the data network 7 via the Network Controller Data Network Interface 13, using protocols such as Ethernet, Token Ring, Fiber Distributed Data Interface (FDDI), Frame Relay, or ATM. The data network 7 provides the necessary protocol interworking (not shown) in order to achieve compatibility between interfaces 6 and 8, and between interfaces 6 and 13.

The NAS 5 and the NC 12 support the signalling protocol required to exchange data call control information. LEC operations personnel may configure NC service via a NC Management Terminal 15, which is connected to the NC 12 via a NC Management Terminal Interface 14. The NC Management Terminal 15 can be either an ASCII terminal capable of sending command-line interface commands to the NC 12, or, alternatively, can also be a workstation running SNMP-based management applications. The NC Management Terminal Interface 14 can be either a direct connection, such as RS-232, or can utilize Local Area Network (LAN) and Wide Area Network (WAN) technologies such as Ethernet, Frame Relay, or Asynchronous Transfer Mode, allowing the NC Management Terminal to be located remotely from the NC.

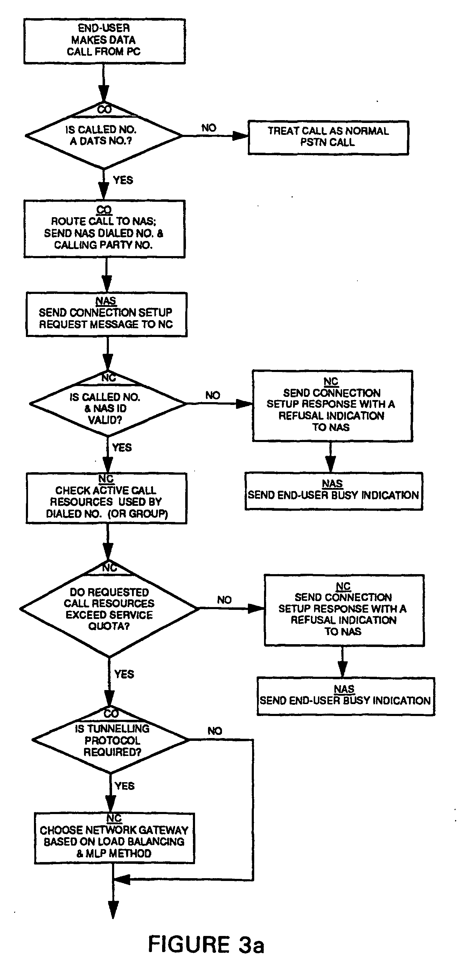

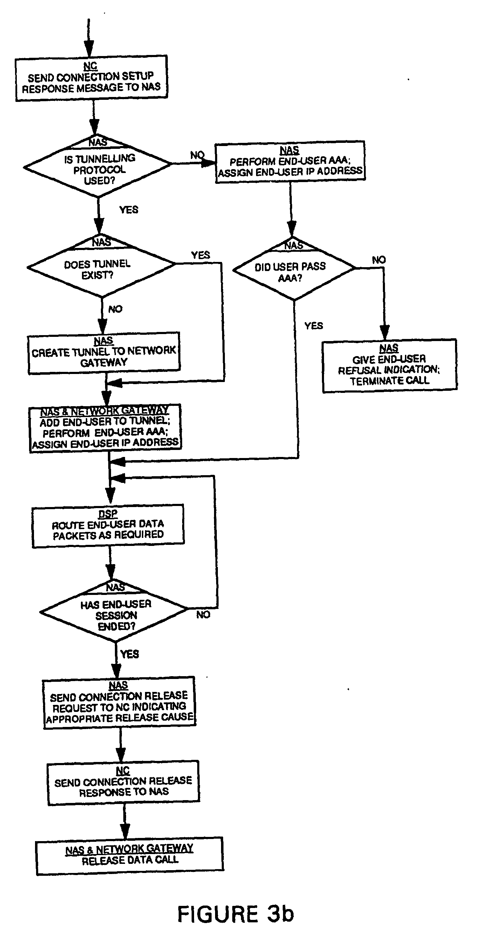

Figures 3a and 3b illustrate the operation of the DATS system described above with reference to Figure 2. A call destined to a subscribed DSP is completed through the central office 3 to the NAS 5. Of necessity, such calls include signalling of the DSP directory number from the CO 10 to the NAS 5. Referring to Figure 2, the call is originated by an end-user via a PC 1 outfitted with either an analog modem or an ISDN Basic Rate Interface (BRI) Terminal Adaptor (TA). The number dialed by the end-user 1 is sent via Dual Tone Multi-Frequency (DTMF) or pulse signalling to the CO 3, where the dialed number is recognized as a DATS-associated number and routed appropriately to a NAS 5 via a CO trunk 4, providing the dialed number and calling party number to the NAS 5 via signalling depending on the CO trunk 4 type.

The NAS 5 in turn sends a connection setup request to the NC 12 using a message-based signalling protocol understood by both the NAS 5 and the NC 12. This protocol may include information that authenticates the NAS to the NC, and the NC to the NAS (for example using NAS/NC identifiers and shared secrets, both of which may be encrypted). Provided in the connection setup request message is the dialed number, the calling party number, the call type (analog or ISDN data) a unique NAS identifier, and a unique call identifier. Other call resources such as requested bandwidth may also be included.

The NC 12 first checks the validity of the NAS identifier and the dialed number indicated in the connection setup request message. If the information is determined to be invalid, that is, if either the NAS identifier or the dialed number do not match the list of NAS identifiers and dialed numbers stored in the NC 12, the NC 12 replies to the NAS 5 with a connection setup response indicating a response code that the NAS 5 interprets as a refusal, which results in an error indication (i.e. fast busy tone or disconnect for an analog modem call, or appropriate ISDN signalling message for an ISDN data call) to the end user 1.

If the information received by the NC 12 in the connection setup request message is valid, the NC 12 checks the number of active call resource(s) currently logged against the dialed number (or dialed number group of which the dialed number is a member). A call resource may be a physical or logical entity required to complete a DATS call (for example, the number of logical ports, the bandwidth available for each call, the aggregate bandwidth for all calls to a DSP). If the number of active call resource(s) is equal to the call resource limit(s) stored against the dialed number or dialed number group, the NC 12 replies to the NAS 5 with a connection setup response indicating a response code that the NAS 5 interprets as a refusal, which results in an indication to the end user 1 that all circuits are busy. If the number of active calls is less than the call limit associated against the dialed number or dialed number group, the call processing proceeds.

If a tunnelling protocol is used by the NAS, the NC 12 then chooses a destination Network Gateway from a list of Network Gateways (associated against the dialed number or dialed number group) stored in the NC12

If the incoming call is a segment of a MLP bundle, then the appropriate Network Gateway is chosen to support MLP requirements. If the call is not associated with a MLP bundle, Network Gateway selection is based on the current number of active calls on each Network Gateway 9, and a Network Gateway relative loading factor stored against each Network Gateway listed on the NC 12.

If a Network Gateway's administrative state (stored at the NC) has been set to "disabled", the NC does not consider the Network Gateway in the load balancing algorithm.

In order to prevent mesh tunnel connectivity between NASs 5 and Network Gateways 9 (resulting in excessive tunnel protocol overhead), the Network Gateway selection can also favour a Network Gateway 9 to which the NAS 5 in question already has a tunnel established. This tunnel favouring is also known as "Tunnel Affinity".

The NC 12 then responds with a connection request response with a response code that the NAS 5 interprets as authorization to complete the data call, and the NC active call counts against the dialed number (or dialed number group) and Network Gateway (if applicable) are incremented. Also included in the connection request is the Network Gateway identifier to which the call is to be routed, its data network address, and any additional service information the NAS 5 may need to complete the call. Once authorized to continue with the data call setup, the NAS 5 will begin to process the analog modem signal or ISDN data frames (depending on the call type), and will commence end-user authentication protocols.

If no tunnelling protocol is used by the NAS 5, the NAS 5 performs all AAA, and once the end-user 1 is authorized, the end-user 1 is assigned a network address (if required), after which end-user originated packets can be routed to the intended address, and end-user defined packets can be routed to the end-user 1.

If a tunnelling protocol is to be used, the NAS 5 sets up a tunnel (if one does not already exist), and AAA information is forwarded on to the DSP authentication device according to the tunnelling protocol methods.

If a network failure condition exists, such that the NAS 5 is unable to open a tunnel to the Network Gateway 9 indicated by the NC 12, the NAS 5 sends an indication to the NC 12 requesting a new Network Gateway allocation, which will result in a response from the NC 12 with a new Network Gateway 9, and the NC 12 marks the failed Network Gateway administrative status as "disabled", which will prevent further calls from being routed to the failed Network Gateway.

Once the end-user 1 is authorized, the end-user 1 is assigned a network address (if required), after which end-user originated packets can be routed to the intended address, and end-user defined packets can be routed to the end-user. Once the end-user 1 has been authenticated, the NAS 5 sends a connection confirmation indication, which includes information relating to the data call, such as initial send/ receive data rate, Network Gateway identifier, and tunnel identifier (if required). If at any time end-user authorization fails, the end user 1 is disconnected according to the associated authorization protocol, and the NAS 5 sends a connection release indication to the NC 12 with the appropriate termination code and associated connection identifier, and the NC active call counts against the dialed number (or dialed number group) and Network Gateway (if applicable) are decremented.

Data call release occurs if the end-user 1 ends a session, if the DSP ends a session, or if the NC 12 forces a session to be released (as a result of a LEC personnel command to the NC via the NC Management Terminal). If the data call is to be released as a result of end-user 1 or DSP action, the NAS 5 sends the NC 12 a connection release indication with an appropriate and mutually understood cause code and connection identifier, to which the NC 12 responds with an acknowledgement message, and the NC active call counts against the dialed number (or dialed number group) and Network Gateway (if applicable) are decremented. If the data call is released as a result of an LEC personnel command to the NC 12, the NC 12 sends the NAS 5 a connection release indication with an appropriate and mutually understood cause code and connection identifier, to which the NAS 5 responds with an acknowledgement message, and the NC active call counts against the dialed number (or dialed number group) and Network Gateway (if applicable) are decremented. If, at any time, a network failure occurs such that multiple end-user sessions are lost and/ or tunnel connectivity is lost, the NAS 5 will send multiple connection release indications with an appropriate and mutually understood cause code and connection identifier, to which the NAS 5 responds with corresponding acknowledgement messages, and the NC active call counts against the associated dialed number(s) (or dialed number group(s) ) and Network Gateway(s) (if applicable) are decremented.

The NC Management Terminal 14 may be used to assign and enforce administrative states on individual DATS system elements, for example any NAS 5, Network Gateway 9 or any directory number or directory number group configuration stored on the NC 12. If the administrative state of a Network Gateway 9 is set to "disabled", the NC 12 will not route any subsequent calls to that Network Gateway 9, nor will the NC 12 consider that Network Gateway's current load in load balancing algorithms, while existing calls previously routed to that Network Gateway 9 will remain unaffected. If the administrative state of a directory number or a group of directory numbers is set to "disabled", the NC 12 will refused requests for connection to that directory number or any directory number in that group of directory numbers from any NAS 5, while existing calls to that directory number or any directory number in that group of directory numbers remain unaffected.

If the administrative state of a NAS 5 is set to "disabled", the NC 12 will refuse connection setup requests sent by that NAS 5 while existing calls previously routed through that NAS 5 will remain unaffected. In addition, when a NAS 5 is flagged as "disabled", the NC 12 may signal the flagged NAS 5 to busy out all PRI channels terminating on that NAS 5, so that the PSTN will not route calls on those PRI channels. If the NC Management Terminal 14 is used to re-enable the NAS 5, the NC 12 may signal the re-enabled NAS 5, causing the re-enabled NAS 5 to signal the PSTN that its PRI B-channels are now available for use so that the PSTN will resume routing calls on those PRI channels.

If at any time a NAS-generated connection setup request is associated with a NAS 5, dialed number, dialed number group, or Network Gateway that has been marked at the NC 12 as being administratively disabled, the NC 12 replies to the NAS 5 with a connection setup response indicating a response code that the NAS 5 interprets as a refusal, which results in an error indication (i.e. fast busy tone or disconnect) to the end user 1.

At regular intervals, the NC 12 may send a status indication to one or more NAS 5, to which the NAS 5 responds with a status confirm message (using the aforementioned signalling protocol). The status confirm message will include a list of all currently active calls, with their identifiers. The NC 12 uses this information to determine if the information stored in the NC 12 is accurate. If the information is not accurate (i.e. some unexpected new calls may be present or some expected calls may be absent), the NC 12 updates its information, and may send another status indication to the NAS 5 requesting more detailed information.

All connection setup requests, connection setup responses, connection release requests, connection release acknowledgements, status indications, status confirmations, many error conditions and statistics are logged or counted for post analysis purposes. In addition, all current (active) call information is stored at the NC 12 for real-time querying and troubleshooting.

The basic data call control and monitoring features described herein, and variations of the same, may well be enhanced. For example, such enhancements include time-of-day dependent DSP service quotas, application to newer access technologies such as ADSL, implementation of redundant NCs, distributing multiple NCs to increase scaleability, supporting mechanised DSP management interfaces for real-time querying of DATS-related statistics by DSP personnel, and incorporation of other signalling protocols such as common channel signalling system number 7 (CCS7) and IN interworking.

While Figure 2 shows only one instance of each of the subscriber PC 1, the subscriber loop 2, the CO 3, the CO trunk 4, NAS 5, the NAS data network interface 6, the DSP data network interface 8, the network gateway 9 and the DSP server 11, it is to be understood that in most applications, there will be a plurality of each of these network components. The embodiment of the invention described above enables a common network controller 12 to manage plural NASs 5 shared by plural DSPs 11 using plural network gateways 9 to realize economies of scale.

## Claims

1. A data access transport system comprising a plurality of network access servers (5) and a network controller (12) connected to the network access servers (5);
each network access server (5) being operable:
to send a connection setup request to the network controller on receipt of a data call before answering the data call, the connection setup request specifying a data service provider to which a connection is requested; and
to receive a connection setup response from the network controller;
to respond to a connection setup response indicating that the connection is to be completed by answering the data call and initiating a connection to the specified data service provider; and
the network controller (12) being operable:
to receive a connection request from any of the network access servers;
to determine whether a quantity of network resources currently used by the data service provider specified in the connection setup request is less than a service quota assigned to the data service provider; and
to send a connection setup response to the network access server which sent the connection setup request, the connection setup response indicating that the requested connection is to be completed when the quantity of network resources currently used by the data service provider is less than the assigned service quota and the connection setup response,
the system being **characterised in that**:
the connection setup response indicates whether the requested connection is to be completed, wherein
the network controller (12) is operable to send, to the network access server which sent the connection setup request, a connection setup response indicating the requested connection is not to be completed when the quantity of network resources currently used by the data service provider is not less than the assigned service quota; and
each network access server (5) is operable to respond to a connection setup response indicating that the connection is not to be completed by initiating a busy indication.

2. A system as defined in claim 1, wherein each network access server is operable:
to detect termination of data calls; and
to send a connection release request to the network controller upon detection of termination of a data call.

3. A network controller (12) for use in a data access transport system comprising a plurality of network access servers connected to the network controller, the network controller comprising.
means for receiving a connection setup request from any of the network access servers;
means for determining whether a quantity of network resources currently used by the data service provider specified in the connection setup request is less than an service quota assigned to the data service provider; and
means for sending a connection setup response to the network access server which sent the connection setup request, the connection setup response indicating that the requested connection is to be completed when the quantity of network resources currently used by the data service provider is less than the assigned service quota; **characterised in that** the connection setup response indicates the requested connection is not to be completed when the quantity of network resources currently used by the data service provider is not less than the assigned service quota.

4. A network controller as defined in claim 3, further comprising:
means for maintaining a count of active calls to each data service provider served by the data access transport system;
means for maintaining a count of active calls served by each network gateway served by the data access transport system; and
means for selecting a network gateway for completing a connection to a data service provider based on the counts of active calls served by each network gateway connected to the data service provider;
the means for sending a connection setup response being responsive to the means for selecting a network gateway to send a connection setup response specifying the selected network gateway.

5. A network controller as defined in claim 4, further comprising means for maintaining a record of tunnels currently connected between network access servers and network gateways, the means for selecting a network gateway being operable to select a network gateway based on the counts of active calls served by each network gateway and the record of tunnels currently connected between network access servers and network gateways.

6. A network controller as defined in claim 4, further comprising means for recognizing call setup requests corresponding to segments of a Multilink Point-to-Point Protocol MLP call, the means for selecting a network gateway for completing a connection to a data service provider being responsive to the means for recognizing call setup requests corresponding to segments of a MLP call to select the same network gateway for all segments of a MLP call.

7. A network controller as defined in claim 3, further comprising means for recognizing call setup requests corresponding to data calls requiring 56 kbps service, the means for sending a connection setup response being responsive to the means for recognizing call setup requests corresponding to data calls requiring 56 kbps service to send a connection setup response indicating that 56 kbps service is required.

8. A network controller as defined in claim 3, further comprising:
means for deriving operational data from at least one of connection setup requests, connection setup responses, connection release requests, connection release acknowledgements and error conditions detected by the network controller; and
means for recording at least some of the derived operational data.

9. A network controller as defined in claim 4, further comprising means for flagging network gateways as disabled, the means for selecting a network gateway responding to the means for flagging network gateways as disabled by not selecting any network gateway currently flagged as disabled.

10. A network controller as defined in claim 9, wherein the means for flagging network gateways as disabled is responsive to receipt of a message from a network access server indicating a failure to open a connection to a particular network gateway to flag that particular network gateway as disabled.

11. A network controller as defined in claim 10, wherein the means for selecting a network gateway is responsive to receipt of the message indicating a failure to open a connection to a particular network gateway to select another network gateway for connection of the call.

12. A network controller as defined in claim 3, further comprising means for flagging groups of directory numbers as disabled, each directory number group comprising at least one directory number, the means for sending a connection setup response being responsive to the means for flagging directory number groups as disabled to send connection setup responses indicating that connections are not to be completed in response to connection setup requests specifying directory numbers in directory number groups which are flagged as disabled.

13. A network controller as defined in claim 3, further comprising means for flagging network access servers as disabled, the means for sending a connection setup response being responsive to the means for flagging network access servers as disabled to send connection setup responses indicating that connections are not to be completed in response to connection setup requests sent by network access servers which are flagged as disabled.

14. A network access server for use in a data access transport system comprising a network controller connected to the network access server, comprising:
means for sending a connection setup request to the network controller on receipt of a data call before answering the data call, the connection setup request specifying a data service provider to which a connection is requested;
means for receiving a connection setup response from the network controller;
means for answering the data call and initiating a connection to the specified data service provider in response to a connection setup response indicating that the connection is to be completed;
**characterised in that** the connection setup response indicates whether the requested connection is to be completed; and said network access server further comprises means for initiating a busy indication in response to a connection setup response indicating that the connection is not to be completed.

15. A network access server as defined in claim 14, further comprising:
means for detecting termination of data calls; and
means for sending a connection release request to the network controller upon detection of termination of a data call.

16. A network access server as defined in claim 14, wherein the means for initiating a connection to the specified data service provider initiates a connection via a network gateway specified in the connection setup response.

17. A network access server as defined in claim 14, further comprising means for sending a message the network controller upon failure to complete a connection to a particular network gateway, the message specifying the particular network gateway.

18. A network access server as defined in claim 14, further comprising means responsive to a signal indicating that the network access server is disabled to send a signal to an access network indicating that access channels of the network access server are unavailable for use.

19. A network access server as defined in claim 18, further comprising means responsive to a signal indicating that the network access server is re-enabled to send a signal to an access network indicating that access channels of the network access server are available for use.

20. A method for operating a data access transport system comprising a plurality of network access servers (5) and a network controller (12) connected to the network access servers, the method comprising:
sending a connection setup request from a network access server to the network controller on receipt of a data call before answering the data call, the connection setup request specifying a data service provider to which a connection is requested;
determining at the network controller whether a quantity of network resources currently used by the data service provider specified in the connection setup request is less than a service quota assigned to the data service provider;
sending a connection setup response from the network controller to the network access server which sent the connection setup request, the connection setup response indicating that the requested connection is to be completed when the quantity of network resources currently used by the data service provider is less than the assigned service quota;
responding at the network access server to a connection setup response indicating that the connection is to be completed by answering the data call and initiating a connection to the specified data service provider;
**characterised in that** the connection setup response indicates requested connection is not to be completed when the quantity of network resources currently used by the data service provider is not less than the assigned service quota; and said method further comprises responding at the network access server to a connection setup response indicating that the connection is not to be completed by initiating a busy indication.

21. A method as defined in claim 20, further comprising:
detecting termination of a data call at a network access server; and
sending a connection release request to the network controller upon detection of the termination.

22. A method for operating a network controller (12) for use in a data access transport system comprising a plurality of network access servers connected to the network controller, the method comprising:
receiving a connection setup request from any of the network access servers;
determining whether a quantity of network resources currently used by the data service provider specified in the connection setup request is less than a service quota assigned to the data service provider; and
sending a connection setup response to the network access server which sent the connection setup request, the connection setup response indicating that the requested connection is to be completed when the quantity of network resources currently used by the data service provider is less than the assigned service quota; **characterised in that** the connection setup response indicates the requested connection is not to be completed when the quantity of network resources currently used by the data service provider is not less than the assigned service quota.

23. A method as defined in claim 22, further comprising:
maintaining a count of active calls to each data service provider served by the data access transport system;
maintaining a count of active calls served by each network gateway served by the data access transport system; and
selecting a network gateway for completing a connection to a data service provider based on the counts of active calls served by each network gateway connected to the data service provider;
the step of sending a connection setup response comprising sending a connection setup response specifying the selected network gateway.

24. A method as defined in claim 23, further comprising maintaining a record of tunnels currently connected between network access servers and network gateways, the step of selecting a network comprising selecting a network gateway based on the counts of active calls served by each network gateway and the record of tunnels currently connected between network access servers and network gateways.

25. A method as defined in claim 23, further comprising recognizing call setup requests corresponding to segments of a MLP call, the step of selecting a network gateway for completing a connection to a data service provider comprising selecting the same network gateway for all segments of a MLP call.

26. A method as defined in claim 22, further comprising recognizing call setup requests corresponding to data calls requiring 56 kbps service, the step of sending a connection setup response comprising sending a connection setup response indicating that 56 kbps service is required.

27. A method as defined in claim 22, further comprising:
deriving operational data from at least one of connection setup requests, connection setup responses, connection release requests, connection release acknowledgements and error conditions detected by the network controller; and
recording at least some of the derived operational data.

28. A method as defined in claim 22, further comprising flagging network gateways as disabled, the step of selecting a network gateway comprising not selecting any network gateway currently flagged as disabled.

29. A method as defined in claim 22, further comprising flagging directory number groups as disabled, each directory number group comprising at least one directory number, the step of sending a connection setup response comprising sending a connection setup response indicating that a connection is not to be completed for any connection setup request specifying a directory number in a directory number group which is flagged as disabled.

30. A method as defined in claim 22, further comprising flagging network access servers as disabled, the step of sending a connection setup response comprising indicating that connections are not to be completed in response to connection setup requests sent by network access servers which are flagged as disabled.

31. A method for operating a network access server in a data access transport system comprising a network controller connected to the network access server, comprising:
sending a connection setup request to the network controller on receipt of a data call before answering the data call, the connection setup request specifying a data service provider to which a connection is requested;
receiving a connection setup response from the network controller;
answering the data call and initiating a connection to the specified data service provider in response to a connection setup response indicating that the connection is to be completed;
**characterised in that** the connection setup response indicates whether the requested connection is to be completed; and said method further comprises initiating a busy indication in response to a connection setup response indicating that the connection is not to be completed.

32. A method as defined in claim 31, further comprising:
detecting termination of data calls; and
sending a connection release request to the network controller upon detection of termination of a data call.

33. A method as defined in claim 31, wherein the step of initiating a connection to the specified data service provider comprises initiating a connection via a network gateway specified in the connection setup response.

## Patentansprüche

1. Datenzugangs-Transportsystem mit einer Vielzahl von Netzwerk-Zugangsservern (5) und einer Netzwerksteuerung (12), die mit den Netzwerk-Zugangsservern (5) verbunden ist; wobei jeder Netzwerk-Zugangsserver (5) betreibbar ist:
um eine Verbindungsaufbau-Anforderung an die Netzwerksteuerung bei Empfang eines Datenanrufs vor der Beantwortung des Datenanrufs zu senden, wobei die Verbindungsaufbau-Anforderung einen Datendienst-Anbieter angibt, zu dem eine Verbindung angefordert wird; und
um eine Verbindungsaufbau-Antwort von der Netzwerksteuerung zu empfangen;
um auf eine Verbindungsaufbau-Antwort, die anzeigt, dass die Verbindung herzustellen ist, zu antworten, indem auf den Datenanruf geantwortet wird und eine Verbindung zu dem angegebenen Datendienst-Anbieter eingeleitet wird; und
die Netzwerksteuerung (12) betreibbar ist:
um eine Verbindungsanforderung von irgendeinem der Netzwerk-Zugangsserver zu empfangen;
um festzustellen, ob eine Menge an Netzwerk-Ressourcen, die derzeit von dem Datendienst-Anbieter verwendet werden, der in der Verbindungsaufbau-Anforderung angegeben ist, kleiner als eine Dienste-Quote ist die dem Datendienst-Anbieter zugeteilt ist; und
um eine Verbindungsaufbau-Antwort an den Netzwerk-Zugangsserver zu senden, der die Verbindungsaufbau-Anforderung gesandt hat, wobei die Verbindungsaufbau-Antwort anzeigt, dass die angeforderte Verbindung herzustellen ist, wenn die Menge an Netzwerk-Ressourcen, die derzeit von dem Datendienst-Anbieter verwendet wird, kleiner als die zugeteilte Dienste-Quote und die Verbindungsaufbau-Antwort ist,
wobei das System **dadurch gekennzeichnet ist, dass**:
die Verbindungsaufbau-Antwort anzeigt, ob die angeforderte Verbindung herzustellen ist, wobei
die Netzwerksteuerung (12) betreibbar ist, um an den Netzwerk-Zugangsserver, der die Verbindungsaufbau-Anforderung gesandt hat, eine Verbindungsaufbau-Antwort zu senden, die anzeigt, dass die angeforderte Verbindung nicht herzustellen ist, wenn die Menge an Netzwerk-Ressourcen, die derzeit von dem Datendienst-Anbieter verwendet wird, nicht kleiner als die zugeteilte Dienste-Quote ist; und
jeder Netzwerk-Zugangsserver (5) betreibbar ist, um auf eine Verbindungsaufbau-Antwort, die anzeigt, dass die Verbindung nicht herzustellen ist, durch Einleiten einer Besetzt-Anzeige zu antworten.

2. System nach Anspruch 1, bei dem jeder Netzwerk-Zugangsserver betreibbar ist:
um die Beendigung von Datenanrufen festzustellen; und
um eine Verbindungsauslösungs-Anforderung an die Netzwerksteuerung bei Feststellung der Beendigung eines Datenanrufs zu senden.

3. Netzwerksteuerung (12) zur Verwendung in einem Datenzugangs-Transportsystem, das eine Vielzahl von Netzwerk-Zugangsservern umfasst, die mit der Netzwerksteuerung verbunden sind, wobei die Netzwerksteuerung Folgendes umfasst:
Einrichtungen zum Empfang einer Verbindungsaufbau-Anforderung von irgendeinem der Netzwerk-Zugangsserver;
Einrichtungen zur Feststellung, ob eine Menge an Netzwerk-Ressourcen, die derzeit von dem Datendienst-Anbieter, der in der Verbindungsaufbau-Anforderung angegeben ist, benutzt wird, kleiner als eine Dienste-Quote ist, die dem Datendienst-Anbieter zugeordnet ist; und
Einrichtungen zum Senden einer Verbindungsaufbau-Antwort an den Netzwerk-Zugangsserver, der die Verbindungsaufbau-Anforderung gesandt hat, wobei die Verbindungsaufbau-Antwort anzeigt, dass die angeforderte Verbindung herzustellen ist, wenn die Menge an derzeit von dem Datendienst-Anbieter verwendeten Netzwerk-Ressourcen kleiner als die zugeteilte Dienste-Quote ist;
**dadurch gekennzeichnet, dass** die Verbindungsaufbau-Antwort anzeigt, dass die angeforderte Verbindung nicht herzustellen ist, wenn die Menge an Netzwerk-Ressourcen, die derzeit von dem Datendienst-Anbieter verwendet wird, nicht kleiner als die zugeteilte Dienste-Quote ist.

4. Netzwerksteuerung nach Anspruch 3, die weiterhin Folgendes umfasst:
Einrichtungen zum Führen einer Zählung der aktiven Anrufe an jeden Datendienst-Anbieter, die von dem Datenzugangs-Transportsystem mit Diensten versorgt werden;
Einrichtungen zum Führen einer Zählung der aktiven Anrufe, die von jeder Netzwerk-Überleiteinrichtung mit Diensten versorgt werden, die von dem Datenzugangs-Transportsystem mit Diensten versorgt wird; und
Einrichtungen zur Auswahl einer Netzwerk-Überleiteinrichtung zur Herstellung einer Verbindung zu dem Datendienst-Anbieter auf der Grundlage der Zählungen der aktiven Anrufe, die von jeder mit dem Datendienst-Anbieter verbundenen Netzwerk-Überleiteinrichtung mit Diensten versorgt werden;
wobei die Einrichtungen zum Senden einer Verbindungsaufbau-Antwort auf die Einrichtung zur Auswahl der Netzwerk-Überleiteinrichtung ansprechen, um eine Verbindungsaufbau-Antwort zu senden, die die ausgewählte Netzwerk-Überleiteinrichtung angibt.

5. Netzwerksteuerung nach Anspruch 4, die weiterhin Einrichtungen zum Führen einer Aufzeichnung von Tunnels umfasst, die derzeit zwischen Netzwerk-Zugangsservern und Netzwerk-Überleiteinrichtungen verbunden sind, wobei die Einrichtungen zur Auswahl einer Netzwerk-Überleiteinrichtung betreibbar sind, um eine Netzwerk-Überleiteinrichtung auf der Grundlage der Zählungen der von jeder Netzwerk-Überleiteinrichtung mit Diensten versorgten aktiven Anrufe und der Aufzeichnung der Tunnels auszuwählen, die zwischen Netzwerk-Zugangsservern und Netzwerk-Überleiteinrichtungen derzeit verbunden sind.

6. Netzwerksteuerung nach Anspruch 4, die weiterhin Einrichtungen zur Erkennung von Verbindungsaufbau-Anforderungen umfasst, die Segmenten eines Mehrfachverbindungs-Punkt-zu-Punkt-Protokoll- (MLP-) Anrufs entsprechen, wobei die Einrichtungen zur Auswahl einer Netzwerk-Überleiteinrichtung zum Herstellen einer Verbindung zu einem Datendienst-Anbieter auf die Einrichtungen zur Erkennung von Verbindungsaufbau-Anforderungen ansprechen, die Segmenten eines MLP-Anrufs entsprechen, um die gleiche Netzwerk-Überleiteinrichtung für alle Segmente eines MLP-Anrufs auszuwählen.

7. Netzwerksteuerung nach Anspruch 3, die weiterhin Einrichtungen zur Erkennung von Verbindungsaufbau-Anforderungen umfasst, die Datenanrufen entsprechen, die einen 56 kbps-Dienst erfordern, wobei die Einrichtungen zum Senden einer Verbindungsaufbau-Antwort auf die Einrichtungen zur Erkennung der Verbindungsaufbau-Anforderungen, die Datenanrufen entsprechen, die einen 56 kbps-Dienst erfordern, ansprechen, um eine Verbindungaufbau-Antwort zu senden, die anzeigt, dass ein 56 kbps-Dienst erforderlich ist.

8. Netzwerksteuerung nach Anspruch 3, die weiterhin Folgendes umfasst:
Einrichtungen zur Ableitung von Betriebsdaten von zumindest einer der Verbindungsaufbau-Anforderungen, Verbindungaufbau-Antworten, Verbindungsauslöse-Anforderungen, Verbindungauslöse-Bestätigungen und Fehlerbedingungen, die von der Netzwerksteuerung festgestellt werden; und
Einrichtungen zur Aufzeichnung von zumindest einigen der abgeleiteten Betriebsdaten.

9. Netzwerksteuerung nach Anspruch 4, die weiterhin Einrichtungen zum Kennzeichnen von Netzwerk-Überleiteinrichtungen als abgeschaltet umfasst, wobei die Einrichtungen zur Auswahl einer Netzwerk-Überleiteinrichtung auf die Einrichtungen zur Kennzeichnung von Netzwerk-Überleiteinrichtung als abgeschaltet dadurch ansprechen, dass sie keine Netzwerk-Überleiteinrichtung auswählen, die derzeit als abgeschaltet gekennzeichnet ist.

10. Netzwerksteuerung nach Anspruch 9, bei der die Einrichtungen zur Kennzeichnung von Netzwerk-Überleiteinrichtungen als abgeschaltet auf den Empfang einer Mitteilung von einem Netzwerk-Zugangsserver ansprechen, die einen Fehlschlag beim Öffnen einer Verbindung zu einer bestimmten Netzwerk-Überleiteinrichtung anzeigt, um diese spezielle Netzwerk-Überleiteinrichtung als abgeschaltet zu kennzeichnen.

11. Netzwerksteuerung nach Anspruch 10, bei der die Einrichtungen zur Auswahl einer Netzwerk-Überleiteinrichtung auf den Empfang der Mitteilung, die den Fehlschlag beim Öffnen einer Verbindung zu einer bestimmten Netzwerk-Überleiteinrichtung anzeigt, anspricht, um eine andere Netzwerk-Überleiteinrichtung für die Verbindung des Anrufs auszuwählen.

12. Netzwerksteuerung nach Anspruch 3, die weiterhin Einrichtungen zur Kennzeichnung von Gruppen von Telefonverzeichnis-Nummern als abgeschaltet umfasst, wobei jede Telefonverzeichnis-Nummer-Gruppe zumindest eine Telefonverzeichnis-Nummer umfasst, wobei die Einrichtungen zum Senden einer Verbindungsaufbau-Antwort auf die Einrichtungen zur Kennzeichnung von Teilnehmerverzeichnis-Nummerngruppen als abgeschaltet ansprechen, um Verbindungsaufbau-Antworten zu senden, die anzeigen, dass Verbindungen in Antwort auf Verbindungsaufbau-Anforderungen nicht hergestellt werden können, die Teilnehmerverzeichnis-Nummern in Teilnehmerverzeichnis-Gruppen angeben, die als abgeschaltet gekennzeichnet sind.

13. Netzwerksteuerung nach Anspruch 3, die weiterhin Einrichtungen zur Kennzeichnung von Netzwerk-Zugangsservem als abgeschaltet umfassen, wobei die Einrichtungen zum Senden einer Verbindungsaufbau-Antwort auf die Einrichtungen zur Kennzeichnung von Netzwerk-Zugangsservern als abgeschaltet ansprechen, um Verbindungaufbau-Antworten zu senden, die anzeigen, dass Verbindungen nicht in Beantwortung von Verbindungsaufbau-Anforderungen hergestellt werden können, die von Netzwerk-Zugangsservern gesandt werden, die als abgeschaltet gekennzeichnet sind.

14. Netzwerk-Zugangsserver zur Verwendung in einem Datenzugangs-Transportsystem, mit einer Netzwerksteuerung, die mit dem Netzwerk-Zugangsserver verbunden ist, mit:
Einrichtungen zum Senden einer Verbindungsaufbau-Anforderung an die Netzwerksteuerung bei Empfang eines Datenanrufs vor der Beantwortung des Datenanrufs, wobei die Verbindungsaufbau-Anforderung den Datendienst-Anbieter angibt, zu dem eine Verbindung angefordert wird;
Einrichtungen zum Empfang einer Verbindungsaufbau-Antwort von der Netzwerksteuerung;
Einrichtungen zur Beantwortung des Datenanrufs und zum Einleiten einer Verbindung zu dem angegebenen Datendienst-Anbieter als Antwort auf eine Verbindungsaufbau-Antwort, die anzeigt, dass die Verbindung herzustellen ist;
**dadurch gekennzeichnet, dass** die Verbindungsaufbau-Antwort anzeigt, ob die angeforderte Verbindung herzustellen ist; und dass der Netzwerk-Zugangsserver weiterhin Folgendes umfasst: Einrichtungen zur Einleitung einer Besetzt-Anzeige als Antwort auf eine Verbindungsaufbau-Antwort, die anzeigt, dass eine Verbindung nicht herzustellen ist.

15. Netzwerk-Zugangsserver nach Anspruch 14, der weiterhin Folgendes umfasst:
Einrichtungen zur Feststellung der Beendigung von Datenanrufen; und
Einrichtungen zum Senden einer Verbindungsauslöse-Anforderung an die Netzwerksteuerung bei Feststellung der Beendigung eines Datenanrufs.

16. Netzwerk-Zugangsserver nach Anspruch 14, bei dem die Einrichtungen zur Einleitung einer Verbindung zu dem angegebenen Datendienst-Anbieter eine Verbindung über eine Netzwerk-Überleiteinrichtung einleitet, die in der Verbindungsaufbau-Antwort angegeben ist.

17. Netzwerk-Zugangsserver nach Anspruch 14, der weiterhin Einrichtungen zum Senden einer Mitteilung an die Netzwerksteuerung bei einem Fehlschlag zur Herstellung einer Verbindung zu einer bestimmten Netzwerk-Überleiteinrichtung umfasst, wobei die Mitteilung die bestimmte Netzwerk-Überleiteinrichtung angibt.

18. Netzwerk-Zugangsserver nach Anspruch 14, der weiterhin Einrichtungen umfasst, die auf ein Signal ansprechen, das anzeigt, dass der Netzwerk-Zugangsserver abgeschaltet ist, um ein Signal an ein Zugangsnetzwerk zu senden, das anzeigt, dass Zugangskanäle des Netzwerk-Zugangsservers nicht zur Verwendung verfügbar sind.

19. Netzwerk-Zugangsserver nach Anspruch 18, der weiterhin Einrichtungen umfasst, die auf ein Signal ansprechen, das anzeigt, dass der Netzwerk-Zugangsserver wieder aktiviert wurde, um ein Signal an ein Zugangsnetzwerk zu senden, das anzeigt, dass die Zugangskanäle des Netzwerk-Zugangsservers zur Verwendung verfügbar sind.

20. Verfahren zum Betrieb eines Datenzugangs-Transportsystems, das eine Vielzahl von Netzwerk-Zugangsservem (5) und eine Netzwerksteuerung (12) umfasst, die mit den Netzwerk-Zugangsservern verbunden ist, wobei das Verfahren Folgendes umfasst:
Senden einer Verbindungsaufbau-Anforderung von einem Netzwerk-Zugangsserver an die Netzwerksteuerung bei Empfang eines Datenanrufs vor dem Beantworten des Datenanrufs, wobei die Verbindungsaufbau-Anforderung einen Datendienst-Anbieter angibt, zu dem eine Verbindung angefordert wird;
Feststellen, an der Netzwerksteuerung, ob eine Menge an Netzwerk-Ressourcen, die derzeit von dem in der Verbindungsaufbau-Anforderung angegebene Datendienst-Anbieter verwendet wird, kleiner als eine Dienste-Quote ist, die dem Datendienst-Anbieter zugeteilt ist;
Senden einer Verbindungsaufbau-Antwort von der Netzwerksteuerung an den Netzwerk-Zugangsserver, der die Verbindungsaufbau-Anforderung gesendet hat, wobei die Verbindungsaufbau-Antwort anzeigt, dass die angeforderte Verbindung herzustellen ist, wenn die Menge an Netzwerk-Ressourcen, die derzeit von dem Datendienst-Anbieter verwendet wird, kleiner als die zugeteilte Dienste-Quote ist;
Antworten, an dem Netzwerk-Zugangsserver, auf eine Verbindungsaufbau-Antwort, die anzeigt, dass die Verbindung herzustellen ist, durch Beantworten des Datenanrufs und Einleiten einer Verbindung zu dem angegebenen Datendienst-Anbieter;
**dadurch gekennzeichnet, dass** die Verbindungsaufbau-Antwort anzeigt, dass die angeforderte Verbindung nicht herzustellen ist, wenn die Menge an Netzwerk-Ressourcen, die derzeit von dem Datendienst-Anbieter verwendet wird, nicht kleiner als die zugeteilte Dienste-Quote ist; und dass das Verfahren weiterhin Folgendes umfasst:
Antworten an dem Netzwerk-Zugangsserver auf eine Verbindungsaufbau-Antwort, die anzeigt, dass die Verbindung nicht herzustellen ist, durch Einleiten einer Besetzt-Anzeige.

21. Verfahren nach Anspruch 20, das weiterhin die Feststellung der Beendigung eines Datenanrufs an einem Netzwerk-Zugangsserver und das Senden einer Verbindungsauslöse-Anforderung an die Netzwerksteuerung bei Feststellung der Beendigung umfasst.

22. Verfahren zum Betrieb einer Netzwerksteuerung (12) zur Verwendung in einem Datenzugangs-Transportsystem mit einer Vielzahl von Netzwerk-Zugangsservern, die mit der Netzwerksteuerung verbunden sind, wobei das Verfahren Folgendes umfasst:
Empfangen einer Verbindungsaufbau-Anforderung von irgendeinem der Netzwerk-Zugangsserver;
Feststellen, ob eine Menge an Netzwerk-Ressourcen, die derzeit von dem Datendienst-Anbieter, der in der Verbindungsaufbau-Anforderung angegeben ist, verwendet werden, kleiner als eine Dienste-Quote, die dem Datendienst-Anbieter zugeteilt ist; und
Senden einer Verbindungsaufbau-Antwort an den Netzwerk-Zugangsserver, der die Verbindungsaufbau-Anforderung gesendet hat, wobei die Verbindungsaufbau-Antwort anzeigt, dass die angeforderte Verbindung herzustellen ist, wenn die Menge der derzeit von dem Datendienst-Anbieter verwendeten Netzwerk-Ressourcen kleiner als die zugeteilte Dienste-Quote ist,
**dadurch gekennzeichnet, dass** die Verbindungsaufbau-Antwort anzeigt, dass die angeforderte Verbindung nicht herzustellen ist, wenn die Menge an derzeit von dem Datendienst-Anbieter verwendeten Netzwerk-Ressourcen nicht kleiner als die zugeteilte Dienste-Quote ist.

23. Verfahren nach Anspruch 22, das weiterhin Folgendes umfasst:
Führen einer Zählung von aktiven Anrufen an jeden Datendienst-Anbieter, der von dem Datenzugangs-Transportsystem mit Diensten versorgt wird;
Führen einer Zählung von aktiven Anrufen, die von jeder Netzwerk-Überleiteinrichtung mit Diensten versorgt werden, die von dem Datenzugangs-Transportsystem mit Diensten versorgt wird; und
Auswählen einer Netzwerk-Überleiteinrichtung zur Herstellung einer Verbindung zu einem Datendienst-Anbieter auf der Grundlage der Zählungen von aktiven Anrufen, die von jeder mit dem Datendienst-Anbieter verbundenen Netzwerk-Überleiteinrichtung mit Diensten versorgt werden;
wobei der Schritt des Sendens einer Verbindungsaufbau-Antwort das Senden einer Verbindungsaufbau-Antwort umfasst, die die ausgewählte Netzwerk-Überleiteinrichtung angibt.

24. Verfahren nach Anspruch 23, das weiterhin das Führen einer Aufzeichnung von Tunnels umfasst, die derzeit zwischen Netzwerk-Zugangsservern und Netzwerk-Überleiteinrichtungen verbunden sind, wobei der Schritt der Auswahl eines Netzwerkes die Auswahl einer Netzwerk-Überleiteinrichtung auf der Grundlage der Zählungen der aktiven Anrufe, die von jeder Netzwerk-Überleiteinrichtung mit Diensten versorgt werden, und der Aufzeichnungen der Tunnels, die derzeit zwischen den Netzwerk-Zugangsservem und den Netzwerk-Überleiteinrichtungen verbunden sind, umfasst.

25. Verfahren nach Anspruch 23, das weiterhin das Erkennen von Verbindungsaufbau-Anforderungen umfasst, die Segmenten eines MLP-Anrufs entsprechen, wobei der Schritt der Auswahl einer Netzwerk-Überleiteinrichtung zur Herstellung einer Verbindung zu einem Datendienst-Anbieter die Auswahl der gleichen Netzwerk-Überleiteinrichtung für alle Segmente eines MLP-Anrufs umfasst.

26. Verfahren nach Anspruch 22, das weiterhin die Erkennung von Verbindungsaufbau-Anforderungen umfasst, die Datenanrufen entsprechen, die einen 56 kbps-Dienst erfordern, wobei der Schritt des Sendens einer Verbindungsaufbau-Antwort das Senden einer Verbindungsaufbau-Antwort umfasst, die anzeigt, dass ein 56 kbps-Dienst erforderlich ist.

27. Verfahren nach Anspruch 22, das weiterhin die Ableitung von Betriebsdaten von zumindest einer der Verbindungsaufbau-Anforderungen, Verbindungsaufbau-Antworten, Verbindungsauslösungsanforderungen, Verbindungsauslösungs-Bestätigungen und Fehlerbedingungen umfasst, die von der Netzwerksteuerung festgestellt werden; und
Aufzeichnen von zumindest einigen der abgeleiteten Betriebsdaten.

28. Verfahren nach Anspruch 22, das weiterhin die Kennzeichnung von Netzwerk-Überleiteinrichtungen als abgeschaltet umfasst, wobei der Schritt der Auswahl einer Netzwerk-Überleiteinrichtung die Nichtauswahl irgendeiner Netzwerk-Überleiteinrichtung umfasst, die derzeit als abgeschaltet gekennzeichnet ist.

29. Verfahren nach Anspruch 22, das weiterhin die Kennzeichnung von Telefonverzeichnis-Nummerngruppen als abgeschaltet umfasst, wobei jede Telefonverzeichnis-Nummerngruppe zumindest eine Telefonverzeichnis-Nummer umfasst, wobei der Schritt des Sendens einer Verbindungsaufbau-Antwort das Senden einer Verbindungsaufbau-Antwort umfasst, die anzeigt, dass eine Verbindung für irgendeine Verbindungsaufbau-Anforderung nicht herzustellen ist, die eine Telefonverzeichnis-Nummer in einer Telefonverzeichnis-Nummerngruppe angibt, die als abgeschaltet gekennzeichnet ist.

30. Verfahren nach Anspruch 22, das weiterhin die Kennzeichnung von Netzwerk-Zugangsservern als abgeschaltet umfasst, wobei der Schritt des Sendens einer Verbindungsaufbau-Antwort die Anzeige umfasst, dass Verbindungen als Antwort auf Verbindungsaufbau-Anforderungen nicht hergestellt werden können, die von Netzwerk-Zugangsservern gesandt werden, die als abgeschaltet gekennzeichnet sind.

31. Verfahren zum Betrieb eines Netzwerk-Zugangsservers in einem Datenzugangs-Transportsystem, das eine Netzwerksteuerung umfasst, die mit dem Netzwerk-Zugangsserver verbunden ist, mit den folgenden Schritten:
Senden einer Verbindungsaufbau-Anforderung an die Netzwerksteuerung bei Empfang eines Datenanrufs vor der Beantwortung des Datenanrufs, wobei die Verbindungsaufbau-Anforderung einen Datendienst-Anbieter angibt, zu dem eine Verbindung angefordert wird;
Empfangen einer Verbindungsaufbau-Antwort von der Netzwerksteuerung;
Beantworten des Datenanrufs und Einleiten einer Verbindung an den angegebenen Datendienst-Anbieter als Antwort auf eine Verbindungsaufbau-Antwort, die anzeigt, dass die Verbindung herzustellen ist;
**dadurch gekennzeichnet, dass** die Verbindungsaufbau-Antwort anzeigt, ob die angeforderte Verbindung herzustellen ist; wobei das Verfahren weiterhin Folgendes umfasst:
Einleiten einer Besetzt-Anzeige als Antwort auf eine Verbindungsaufbau-Antwort, die anzeigt, dass die Verbindung nicht herzustellen ist.

32. Verfahren nach Anspruch 31, das weiterhin Folgendes umfasst:
Feststellen der Beendigung von Datenanrufen; und
Senden einer Verbindungsauslöse-Anforderung an die Netzwerksteuerung bei Feststellen der Beendigung eines Datenanrufs.

33. Verfahren nach Anspruch 31, bei dem der Schritt der Einleitung einer Verbindung an den angebenen Datendienst-Anbieter die Einleitung einer Verbindung über eine Netzwerk-Überleiteinrichtung umfasst, die in der Verbindungaufbau-Antwort angegeben ist.

## Revendications

1. Système de transport d'accès de données comprenant une pluralité de serveurs d'accès au réseau (5) et un contrôleur de réseau (12) connecté aux serveurs d'accès au réseau (5) ;
chaque serveur d'accès au réseau (5) pouvant fonctionner :
pour envoyer une demande d'établissement de connexion au contrôleur de réseau dès réception d'un appel de données, avant de répondre à cet appel de données, la demande d'établissement de connexion spécifiant un fournisseur de service de transmission de données vers lequel une connexion est requise ; et
pour recevoir une réponse d'établissement de connexion du contrôleur de réseau ;
pour répondre à une réponse d'établissement de connexion indiquant que la connexion doit être réalisée en répondant à l'appel de données et en initialisant une connexion vers le fournisseur de service de transmission de données spécifié ; et
le contrôleur de réseau (12) pouvant fonctionner:
pour recevoir une demande de connexion de l'un quelconque des serveurs d'accès au réseau ;
pour déterminer si une quantité de ressources de réseau présentement utilisées, par le fournisseur de service de transmission de données spécifié dans la demande d'établissement de connexion est inférieure à un quota de service assigné au fournisseur de service de transmission de données ; et
pour envoyer une réponse d'établissement de connexion au serveur d'accès au réseau qui a envoyé la demande d'établissement de connexion, cette réponse d'établissement de connexion indiquant que la connexion requise doit être réalisée lorsque la quantité de ressources de réseau présentement utilisées par le fournisseur de service de transmission de données est inférieure au quota de service assigné,
le système étant **caractérisé en ce que** :
la réponse d'établissement de connexion indique si la connexion requise doit être réalisée,
le contrôleur de réseau (12) pouvant fonctionner pour envoyer, au serveur d'accès au réseau qui a transmis la demande d'établissement de connexion, une réponse d'établissement de connexion indiquant que la connexion requise ne doit pas être réalisée lorsque la quantité de ressources de réseau présentement utilisées par le fournisseur de service de transmission de données n'est pas inférieure au quota de service assigné ; et
chaque serveur d'accès au réseau (5) pouvant fonctionner pour répondre à une réponse d'établissement de connexion indiquant que la connexion ne doit pas être réalisée en générant une indication « occupé ».

2. Système tel que défini dans la revendication 1, dans lequel chaque serveur d'accès au réseau peut fonctionner:
pour détecter la fin des appels de données ; et
pour envoyer une demande de libération de connexion au contrôleur de réseau dès détection de la fin d'un appel de données.

3. Contrôleur de réseau (12) pour utilisation dans un système de transport d'accès de données comprenant une pluralité de serveurs d'accès au réseau connectés au contrôleur de réseau, le contrôleur de réseau comprenant :
des moyens de réception d'une demande d'établissement de connexion de l'un quelconque des serveurs d'accès au réseau;
des moyens pour déterminer si une quantité de ressources de réseau présentement utilisées par le fournisseur de service de transmission de données spécifié dans la demande d'établissement de connexion est inférieure à un quota de service assigné au fournisseur de service de transmission de données ; et
des moyens d'envoi d'une réponse d'établissement de connexion au serveur d'accès au réseau qui a transmis la demande d'établissement de connexion, la réponse d'établissement de connexion indiquant que la connexion requise doit être réalisée lorsque la quantité de ressources de réseau présentement utilisées par le fournisseur de service de transmission de données est inférieure au quota de service assigné ; **caractérisé en ce que** la réponse d'établissement de connexion indique que la connexion requise ne doit pas être réalisée lorsque la quantité de ressources de réseau présentement utilisées par le fournisseur de service de transmission de données n'est pas inférieure au quota de service assigné.

4. Contrôleur de réseau tel que défini dans la revendication 3, comprenant en outre :
des moyens de tenue d'un compte d'appels actifs vers chaque fournisseur de service de transmission de données desservi par le système de transport d'accès de données;
des moyens de tenue d'un compte d'appels actifs desservis par chaque passerelle de réseau desservie par le système de transport d'accès de données ; et
des moyens de sélection d'une passerelle de réseau pour réaliser une connexion vers un fournisseur de service de transmission de données d'après les comptes d'appels actifs desservis par chaque passerelle de réseau connectée au fournisseur de service de transmission de données ;
les moyens d'envoi d'une réponse d'établissement de connexion réagissant aux moyens de sélection d'une passerelle de réseau en envoyant une réponse d'établissement de connexion spécifiant la passerelle de réseau sélectionnée.

5. Contrôleur de réseau tel que défini dans la revendication 4, comprenant en outre des moyens de tenue d'un enregistrement des tunnels reliant présentement les serveurs d'accès au réseau et les passerelles de réseau, les moyens de sélection d'une passerelle de réseau pouvant fonctionner pour sélectionner une passerelle de réseau d'après les comptes d'appels actifs desservis par chaque passerelle de réseau et l'enregistrement des tunnels reliant présentement les serveurs d'accès au réseau et les passerelles de réseau.

6. Contrôleur de réseau tel que défini dans la revendication 4, comprenant en outre des moyens de reconnaissance des demandes d'établissement d'appels correspondant aux segments d'un appel MLP (Multilink Point-to-Point Protocol - protocole point par point multiliaison), les moyens de sélection d'une passerelle de réseau pour réaliser une connexion vers un fournisseur de service de transmission de données réagissant aux moyens de reconnaissance des demandes d'établissement d'appels correspondant aux segments d'un appel MLP en sélectionnant cette passerelle de réseau pour tous les segments d'un appel MLP.

7. Contrôleur de réseau tel que défini dans la revendication 3, comprenant en outre des moyens de reconnaissance des demandes d'établissement d'appels correspondant aux appels de données requérant un service à 56 kbps, les moyens d'envoi d'une réponse d'établissement de connexion réagissant aux moyens de reconnaissance des demandes d'établissement d'appels correspondant aux appels de données requérant un service à 56 kbps en envoyant une réponse d'établissement de connexion indiquant qu'un service à 56 kbps est requis.

8. Contrôleur de réseau tel que défini dans la revendication 3, comprenant en outre :
des moyens pour déduire des données opérationnelles d'au moins l'une des demandes d'établissement de connexion, des demandes de libération de connexion, des accusés de réception de libération de connexion et des conditions d'erreurs détectés par le contrôleur de réseau ; et
des moyens d'enregistrement d'au moins certaines des données opérationnelles déduites.

9. Contrôleur de réseau tel que défini dans la revendication 4, comprenant en outre des moyens pour marquer de passerelles de réseaux comme étant désactivées, les moyens de sélection d'une passerelle de réseau réagissant aux moyens de marquage de passerelles de réseaux comme étant désactivées en ne sélectionnant aucune passerelle de réseau présentement marquée comme étant désactivée.

10. Contrôleur de réseau tel que défini dans la revendication 9, dans lequel les moyens de marquage de passerelles de réseaux comme étant désactivées réagissent à la réception d'un message d'un serveur d'accès au réseau indiquant l'échec d'ouverture d'une connexion vers une passerelle de réseau particulière en marquant cette passerelle de réseau comme étant désactivée.

11. Contrôleur de réseau tel que défini dans la revendication 10, dans lequel les moyens de sélection d'une passerelle de réseau réagissent à la réception du message indiquant l'échec d'ouverture d'une connexion vers une passerelle de réseau particulière en sélectionnant une autre passerelle de réseau pour la connexion de l'appel.

12. Contrôleur de réseau tel que défini dans la revendication 3, comprenant en outre des moyens pour marquer des groupes de numéros de répertoires comme étant désactivés, chaque groupe de numéros de répertoires comprenant au moins un numéro de répertoire, les moyens d'envoi d'une réponse d'établissement de connexion réagissant aux moyens de marquage de groupes de numéros de répertoires comme étant désactivés en envoyant des réponses d'établissement de connexion indiquant que les connexions ne sont pas réalisées en réponse aux demandes d'établissement de connexion spécifiant des numéros de répertoires dans des groupes de numéros de répertoires marqués comme étant désactivés.

13. Contrôleur de réseau tel que défini dans la revendication 3, comprenant en outre des moyens pour marquer de serveurs d'accès au réseau comme étant désactivés, les moyens d'envoi d'une réponse d'établissement de connexion réagissant aux moyens de marquage de serveurs d'accès au réseau comme étant désactivés en envoyant des réponses d'établissement de connexion indiquant que des connexions ne doivent pas être réalisées en réponse aux demandes d'établissement de connexion envoyées par les serveurs d'accès au réseau marqués comme étant désactivés.

14. Serveur d'accès au réseau pour utilisation dans un système de transport d'accès de données comprenant un contrôleur de réseau connecté au serveur d'accès au réseau, comprenant :
des moyens d'envoi d'une requête d'établissement de connexion au contrôleur de réseau dès réception d'un appel de données, avant de répondre à cet appel de données, la demande d'établissement de connexion spécifiant un fournisseur de service de transmission de données vers lequel une connexion est requise ;
des moyens de réception d'une réponse d'établissement de connexion du contrôleur de réseau ;
des moyens de réponse à l'appel de données et d'initialisation d'une connexion vers le fournisseur de service de transmission de données spécifié en réponse à une réponse d'établissement de connexion indiquant que la connexion doit être réalisée ;
**caractérisé en ce que** la réponse d'établissement de connexion indique si la connexion requise doit être réalisée ; et ledit serveur d'accès au réseau comprend en outre :
des moyens de génération d'une indication « occupé » en réponse à une réponse d'établissement de connexion indiquant que la connexion ne doit pas être réalisée.

15. Serveur d'accès au réseau tel que défini dans la revendication 14, comprenant en outre :
des moyens de détection de la fin des appels des données ; et
des moyens d'envoi d'une demande de libération de connexion au contrôleur de réseau dès détection de la fin d'un appel de données.

16. Serveur d'accès au réseau tel que défini dans la revendication 14, dans lequel les moyens d'initialisation d'une connexion vers le fournisseur de service de transmission de données spécifié initialisent une connexion via une passerelle de réseau spécifiée dans la réponse d'établissement de connexion.

17. Serveur d'accès au réseau tel que défini dans la revendication 14, comprenant en outre des moyens d'envoi d'un message au contrôleur de réseau en cas d'échec de réalisation d'une connexion vers une passerelle de réseau particulière, ce message indiquant cette passerelle de réseau particulière.

18. Serveur d'accès au réseau tel que défini dans la revendication 14, comprenant en outre des moyens réagissant à un signal indiquant que le serveur d'accès au réseau est désactivé, en envoyant un signal à un réseau d'accès indiquant que les voies d'accès au serveur d'accès au réseau sont indisponibles et ne peuvent être utilisées.

19. Serveur d'accès au réseau tel que défini dans la revendication 18, comprenant en outre des moyens réagissant à un signal indiquant que le serveur d'accès au réseau est réactivé en envoyant un signal à un réseau d'accès indiquant que les voies d'accès du serveur d'accès au réseau sont disponibles et peuvent être utilisées.

20. Méthode d'exploitation d'un système de transport d'accès de données comprenant une pluralité de serveurs d'accès au réseau (5) et un contrôleur de réseau (12) connecté aux serveurs d'accès au réseau, cette méthode comprenant :
l'envoi d'une requête d'établissement de connexion depuis un serveur d'accès au réseau vers le contrôleur de réseau dès réception d'un appel de données, avant la réponse à cet appel de données, la demande d'établissement de connexion spécifiant un fournisseur de service de transmission de données vers lequel la connexion est requise ;
la détermination, au niveau du contrôleur de réseau, du fait qu'une quantité de ressources de réseau présentement utilisées par le fournisseur de service de transmission de données spécifié dans la demande d'établissement de connexion est ou non inférieure à un quota de service assigné au fournisseur de service de transmission de données ;
l'envoi d'une réponse d'établissement de connexion depuis le contrôleur de réseau vers le serveur d'accès au réseau qui a transmis la demande d'établissement de connexion, la réponse d'établissement de connexion indiquant que la connexion requise doit être réalisée lorsque la quantité de ressources de réseau présentement utilisées par le fournisseur de service de transmission de données est inférieure au quota de service assigné ;
la réaction, au niveau du serveur d'accès au réseau, à une réponse d'établissement de connexion indiquant que la connexion doit être réalisée, en répondant à l'appel de données et en initialisant une connexion vers le fournisseur de service de transmission de données spécifié ;
**caractérisée en ce que** la réponse d'établissement de connexion indique que la connexion requise ne doit pas être réalisée lorsque la quantité de ressources de réseau présentement utilisées par le fournisseur de service de transmission de données n'est pas inférieure au quota de service assigné ; et ladite méthode comprend en outre
la réaction, au niveau du serveur d'accès au réseau, à une réponse d'établissement de connexion indiquant que la connexion ne doit pas être réalisée, en initialisant une indication « occupée ».

21. Méthode telle que définie dans la revendication 20, comprenant en outre :
la détection de la fin d'un appel de données au niveau d'un serveur d'accès au réseau ; et
l'envoi d'une demande de libération de connexion au contrôleur de réseau dès détection de cette fin d'appel de données.

22. Méthode d'exploitation d'un contrôleur de réseau (12) pour utilisation dans un système de transport d'accès de données comprenant une pluralité de serveurs d'accès au réseau connectés à ce contrôleur de réseau, cette méthode comprenant les étapes suivantes:
recevoir une requête d'établissement de connexion de l'un quelconque des serveurs d'accès au réseau;
déterminer si une quantité de ressources de réseau présentement utilisées par le fournisseur de service de transmission de données spécifié dans la demande d'établissement de connexion est ou non inférieure à un quota de service assigné au fournisseur de service de transmission de données ; et
envoyer une réponse d'établissement de connexion au serveur d'accès au réseau qui a transmis la demande d'établissement de connexion, cette réponse d'établissement de connexion indiquant que la connexion requise doit être réalisée lorsque la quantité de ressources de réseau présentement utilisées par le fournisseur de service de transmission de données est inférieure au quota de service assigné ;
**caractérisée en ce que** la réponse d'établissement de connexion indique que la connexion requise ne doit pas être réalisée lorsque la quantité de ressources de réseau présentement utilisées par le fournisseur de service de transmission de données n'est pas inférieure au quota de service assigné.

23. Méthode telle que définie dans la revendication 22, comprenant en outre :
la tenue d'un compte d'appels actifs vers chaque fournisseur de service de transmission de données desservi par le système de transport d'accès de données ;
la tenue d'un compte d'appels actifs desservis par chaque passerelle de réseau desservie par le système de transport d'accès de données ; et
la sélection d'une passerelle de réseau pour réaliser une connexion vers un fournisseur de service de transmission de données d'après les comptes d'appels actifs desservis par chaque passerelle de réseau connectée au fournisseur de service de transmission de données ;
l'étape d'envoi d'une réponse d'établissement de connexion comprenant l'envoi d'une réponse d'établissement de connexion spécifiant la passerelle de réseau sélectionnée.

24. Méthode définie dans la revendication 23, comprenant en outre la tenue d'un enregistrement des tunnels reliant présentement les serveurs d'accès au réseau et les passerelles de réseaux, l'étape de sélection d'un réseau comprenant la sélection d'une passerelle de réseau d'après les comptes d'appels actifs desservis par chaque passerelle de réseau et l'enregistrement des tunnels reliant présentement les serveurs d'accès au réseau et les passerelles de réseau.

25. Méthode telle que définie dans la revendication 23, comprenant en outre la reconnaissance des demandes d'établissement de connexion correspondant aux segments d'un appel MLP, l'étape de sélection d'une passerelle de réseau pour réaliser une connexion vers un fournisseur de service de transmission de données comprenant la sélection de cette passerelle de réseau pour tous les segments d'un appel MLP.

26. Méthode telle que définie dans la revendication 22, comprenant en outre la reconnaissance des demandes d'établissement d'appels correspondant aux appels de données requérant un service à 56 kbps, l'étape d'envoi d'une réponse d'établissement de connexion comprenant l'envoi d'une réponse d'établissement de connexion indiquant qu'un service à 56 kbps est requis.

27. Méthode telle que définie dans la revendication 22, comprenant en outre : la déduction de données opérationnelles d'au moins l'une des demandes d'établissement de connexion, des réponses d'établissement de connexion, des demandes de libération de connexion, des accusés de réception de libération de connexion et des conditions d'erreurs détectées par le contrôleur de réseau ; et
l'enregistrement d'au moins certaines des données opérationnelles déduites.

28. Méthode telle que définie dans la revendication 22, comprenant en outre le marquage de passerelles de réseaux comme étant désactivées, l'étape de sélection d'une passerelle de réseau comprenant la non-sélection d'une passerelle de réseau présentement marquée comme étant désactivée.

29. Méthode telle que définie dans la revendication 22, comprenant en outre le marquage d'un groupe de numéros de répertoires comme étant désactivé, chaque groupe de numéros de répertoires comprenant au moins un numéro de répertoire, l'étape d'envoi d'une réponse d'établissement de connexion comprenant une réponse d'établissement de connexion indiquant qu'aucune connexion ne doit être réalisée pour une demande d'établissement de connexion spécifiant un numéro de répertoire dans un groupe de numéros de répertoires marqué comme étant désactivé.

30. Méthode telle que définie dans la revendication 22, comprenant en outre le marquage de serveurs d'accès au réseau comme étant désactivés, l'étape d'envoi d'une réponse d'établissement de connexion comprenant l'indication que des connexions ne doivent pas être réalisées en réponse à des demandes d'établissement de connexion envoyées par des serveurs d'accès au réseau marqués comme étant désactivés.

31. Méthode d'exploitation d'un serveur d'accès au réseau dans un système de transport d'accès de données comprenant un contrôleur de réseau connecté au serveur d'accès au réseau, comprenant :
l'envoi d'une requête d'établissement de connexion au contrôleur de réseau dès réception d'un appel de données, avant la réponse à cet appel de données, la demande d'établissement de connexion spécifiant un fournisseur de service de transmission de données vers lequel la connexion est requise ;
la réception d'une réponse d'établissement de connexion du contrôleur de réseau ;
la réponse à l'appel de données et l'initialisation d'une connexion vers le fournisseur de service de transmission de données spécifié en réponse à une réponse d'établissement de connexion indiquant que la connexion doit être réalisée ;
**caractérisée en ce que** la réponse d'établissement de connexion indique si la connexion requise doit être réalisée;
et ladite méthode comprend en outre
la génération d'une indication « occupé » en réponse à une réponse d'établissement de connexion indiquant que la connexion ne doit pas être réalisée.

32. Méthode telle que définie dans la revendication 31, comprenant en outre :
la détection de la fin des appels de données ; et
l'envoi d'une demande, de libération de connexion vers le contrôleur de réseau dès détection de la fin d'un appel de données.

33. Méthode telle que définie dans la revendication 31, dans laquelle l'étape d'initialisation d'une connexion vers le fournisseur de service de transmission de données spécifié comprend l'initialisation d'une connexion via une passerelle de réseau spécifiée dans la réponse d'établissement de connexion.
